# FASCICULE DE BREVET EUROPEEN

(11) **EP 1 993 019 B1**
(45) Date de publication et mention de la délivrance du brevet: **10.07.2013**
(21) Numéro de dépôt: 08290451.7
(22) Date de dépôt: 14.05.2008
(51) Int. Cl.: G06F 1/32

(54) **Dispositif d'alimentation d'un circuit électronique et circuit électronique**
Vorrichtung zur Stromversorgung einer elektronischen Schaltung und elektronische Schaltung
Device for supplying electric power to an electronic circuit and electronic circuit

(30) Priorité: 18.05.2007 FR 0755129
(43) Date de publication de la demande: 19.11.2008
(73) Titulaire: Commissariat à l'Énergie Atomique et aux Énergies Alternatives, 75015 Paris (FR)
(72) Inventeur: Miermont, Sylvain, 38100 Grenoble (FR); Beigne, Edith, 38112 Meaudre (FR); Vivet, Pascal, 38760 Saint Paul de Varces (FR)
(74) Mandataire: Bonnans, Arnaud

(56) Documents cités:
- US-A1- 2003 212 916
- US-B1- 6 289 465
- CALHOUN B H ET AL: "Ultra-dynamic Voltage scaling (UDVS) using sub-threshold operation and local Voltage dithering" IEEE Journal of Solid-State Circuits IEEE USA, vol. 41, no. 1, janvier 2006 (2006-01), pages 238-245, XP002461237 ISSN: 0018-9200

## Description

La présente invention concerne un dispositif d'alimentation d'un circuit électronique, ainsi qu'un circuit électronique associé.

Dans les circuits électroniques logiques, en particulier ceux réalisés en technologie CMOS, il est connu que la puissance électrique moyenne consommée varie approximativement avec le carré de la tension d'alimentation du circuit électronique, tandis que le temps de propagation des informations (et donc la durée nécessaire à la réalisation d'une opération donnée) est approximativement inversement proportionnel à cette tension d'alimentation.

Il est ainsi possible de réduire l'énergie consommée pour une opération donnée (énergie égale au produit de la puissance consommée et du temps nécessaire à cette opération) en diminuant la tension d'alimentation, ceci naturellement lorsque la fonctionnalité impliquée rend possible un compromis sur la rapidité d'exécution de l'opération.

Dans ce contexte, il a été proposé, par exemple dans les articles *"*An LSI for Vdd-Hopping and MPEG4 System Based on the Chip", in actes de IEEE Intl. Symp. on Circuits and Systems (ISCAS), 2001 and *"*Fast Block-Wise Vdd-Hopping Scheme", in actes de IEICE Society Conference, 2003, de pouvoir sélectionner la tension d'alimentation entre une tension haute assurant le fonctionnement du circuit électronique en régime nominal (temps d'exécution des opérations réduit) et une tension basse permettant de réduire la consommation d'énergie.

Dans de tels systèmes, il se pose des problèmes lors des phases de transition entre tension haute et tension basse, du fait par exemple de l'injection de courant de l'alimentation à tension haute vers l'alimentation à tension basse lorsque les deux tensions sont appliquées simultanément pour éviter toute rupture d'alimentation.

Pour remédier notamment à ces problèmes, l'invention propose un dispositif d'alimentation d'un circuit électronique avec des moyens pour appliquer sélectivement au moins une première tension ou une seconde tension à une borne d'alimentation du circuit électronique, caractérisé par des moyens pour appliquer à la borne d'alimentation une tension variable d'une valeur égale à la première tension à une valeur égale à la seconde tension et des moyens pour sélectionner l'application de la seconde tension sur la borne d'alimentation lorsque la tension variable atteint la seconde tension.

On assure ainsi une continuité d'application de tension à la borne d'alimentation du circuit électronique sans toutefois créer des phénomènes néfastes, tels que des injections de courant d'une source vers l'autre, du fait que la seconde tension n'est sélectionnée que lorsqu'elle est à égalité avec la tension variable appliquée au préalable.

Les moyens pour appliquer une tension variable peuvent éventuellement être aptes à générer également des valeurs de tension en dehors de la plage délimitée par les valeurs respectives de la première tension et de la seconde tension. Notamment, lorsque la première tension est supérieure à la seconde tension, les moyens pour appliquer une tension variable peuvent être aptes à appliquer une valeur de tension inférieure à la seconde tension pour éviter de manière certaine tout phénomène d'injection de courant. En pratique, ces moyens peuvent d'ailleurs être réalisés par un circuit apte à générer une tension comprise entre la première tension et une tension nulle.

On peut prévoir par ailleurs des moyens de mesure d'une tension mesurée sur la borne d'alimentation, auquel cas les moyens pour appliquer la tension variable sont par exemple aptes à déterminer la tension variable en fonction de la tension mesurée. Une telle boucle d'asservissement permet un meilleur contrôle de la tension effectivement appliquée et assure ainsi un bon fonctionnement du dispositif.

En pratique, les moyens pour appliquer la tension variable comprennent par exemple un générateur de rampe de tension, un comparateur de la tension mesurée et de la tension générée par le générateur et des moyens pour former la tension variable en fonction d'une comparaison générée par le comparateur.

De manière analogue, on peut prévoir, pour passer de la seconde tension à la première tension, des moyens pour appliquer la tension variable à la borne d'alimentation lorsque la seconde tension est appliquée à la borne d'alimentation, des moyens pour supprimer l'application de la seconde tension lorsque la tension variable est appliquée et des moyens pour commander la tension variable d'une valeur égale à la seconde tension à une valeur égale à la première tension.

Selon une possibilité de réalisation, des moyens pour générer la tension variable peuvent comprendre au moins un transistor connecté à une tension fixe.

Les moyens pour générer la tension variable peuvent dans ce cas inclure par exemple une pluralité de transistors ayant un drain commun et une source commune dont l'un est lié à une tension fixe et des grilles aptes à être commandées indépendamment.

La première tension peut alors être reliée à la borne d'alimentation par l'intermédiaire dudit au moins un transistor. La tension fixe est par exemple égale à la première tension.

Dans ce contexte, la seconde tension peut en outre être reliée à la borne d'alimentation par l'intermédiaire d'un transistor distinct dudit au moins un transistor et commandé par lesdits moyens pour sélectionner l'application de la seconde tension sur la borne d'alimentation.

En pratique, le dispositif peut être réalisé en technologie CMOS.

Ces caractéristiques contribuent à une mise en oeuvre particulièrement simple et efficace.

La première tension est par exemple supérieure à la seconde tension, comme par exemple dans les modes de réalisation présentés ci-après.

La première tension peut correspondre à une tension d'alimentation nominale du circuit électronique, la seconde tension pouvant alors être celle d'alimentation à un régime de faible consommation d'énergie.

On remarque que, selon certaines mises en oeuvre envisageables, des moyens pour générer la seconde tension appliquée sont aptes à générer une tension variable. Le dispositif peut en effet utiliser une pluralité de tensions variables dès lors qu'il assure une continuité non seulement de l'application de la tension, mais également des valeurs de tension appliquées.

De même, on peut prévoir que les moyens pour appliquer sélectivement la première tension et la seconde tension sont aptes à appliquer au moins une troisième tension, non comprise entre la première tension et la seconde tension, à la borne d'alimentation. L'invention ne se limite pas en effet au cas où le dispositif permet deux tensions d'alimentation, mais s'applique également au contraire aux cas où trois tensions d'alimentation ou plus sont envisagées.

L'invention propose également un circuit électronique comprenant un dispositif d'alimentation tel que présenté ci-dessus, caractérisé en ce qu'il comprend un circuit de gestion de l'alimentation apte à commander le dispositif d'alimentation.

D'autres caractéristiques et avantages de l'invention apparaîtront à la lumière de la description qui suit, faite en référence aux dessins annexés dans lesquels :
- la figure 1 représente les éléments essentiels d'un exemple de dispositif d'alimentation conforme aux enseignements de l'invention ;
- la figure 2 représente certains signaux lors d'une phase transitoire descendante dans le cadre du dispositif de la figure 1 ;
- la figure 3 représente certains signaux lors d'une phase transitoire montante dans le cadre du dispositif de la figure 1
- la figure 4 représente un exemple de mise en oeuvre d'un dispositif d'alimentation conforme aux enseignements de l'invention ;
- la figure 5 représente certains signaux lors d'une phase transitoire descendante dans le cadre du dispositif de la figure 4 ;
- la figure 6 représente certains signaux lors d'une phase transitoire montante dans le cadre du dispositif de la figure 4.

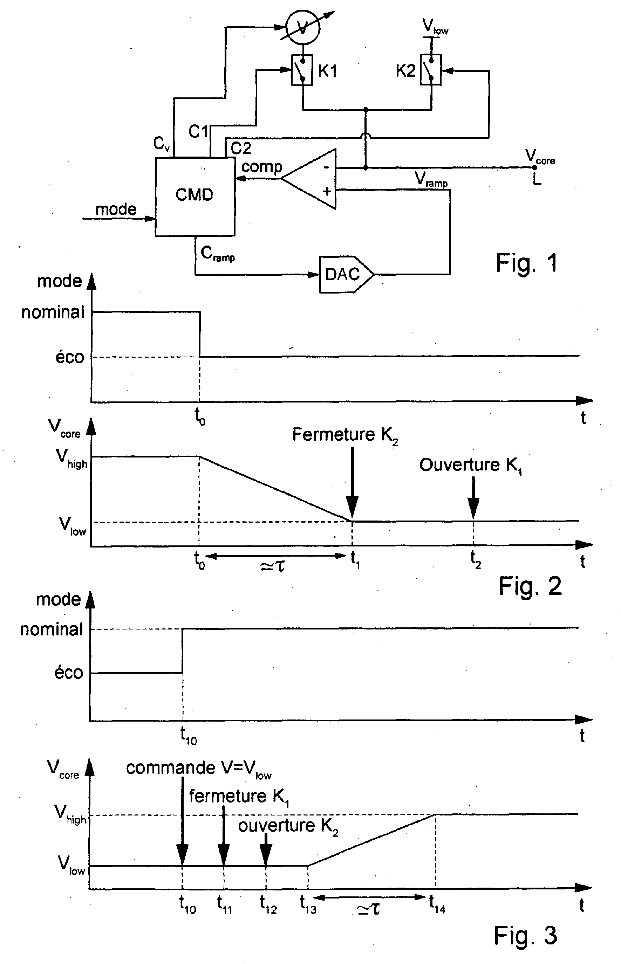

La figure 1 représente, sous forme de schéma de principe, les éléments essentiels d'un exemple de réalisation de l'invention.

Le dispositif d'alimentation de la figure 1 comprend une première source de tension V apte à délivrer une tension variable en fonction d'une information de commande Cᵥ (dont l'origine sera indiquée plus bas) et une seconde source de tension V_{low}, ici fixe.

La première source de tension V est reliée à une borne d'alimentation L d'une charge électrique alimentée par le dispositif par l'intermédiaire d'un premier interrupteur commandé K₁. La seconde source de tension V_{low} est quant à elle reliée à la borne d'alimentation L par l'intermédiaire d'un second interrupteur commandé K₂.

Chacun des interrupteurs K₁, K₂ est commandé respectivement par un signal C₁, C₂ émis par un module de commande CMD.

En régime établi, le module de commande CMD reçoit d'un module de gestion de l'alimentation (non représenté) un signal mode sur la base duquel le module de commande CMD commande les interrupteurs K₁, K₂ de manière à appliquer soit la première source de tension V, soit la seconde source de tension V_{low} à la borne d'alimentation L.

Le module de commande CMD n'applique donc, en régime établi, qu'une seule des deux sources de tension V, V_{low} selon le mode indiqué par le signal mode (tension nominale ou économie d'énergie). Le module de commande CMD provoque en revanche la fermeture simultanée des interrupteurs K₁, K₂ dans certaines périodes de la phase de transition d'une source de tension à l'autre comme cela sera expliqué plus en détail dans la suite.

On désigne par la suite par V_{core} la tension sur la borne d'alimentation L.

Comme visible sur la figure 1, le dispositif décrit ici comprend également un comparateur qui reçoit sur son entrée négative la tension V_{core} précitée et sur son entrée positive une tension Vᵣₐₘₚ générée par un convertisseur numérique - analogique DAC sur la base d'un signal de commande Cᵣₐₘₚ généré par le module de commande CMD.

Le signal comp en sortie du comparateur est réinjecté vers le module de commande CMD.

On va à présent décrire les grandes lignes du fonctionnement du dispositif de la figure 1 lors des transitions entre la tension V_{high} de fonctionnement nominal et la tension V_{low} permettant le fonctionnement à consommation d'énergie réduite.

On étudiera tout d'abord en référence à la figure 2 un exemple de transition de la tension haute V_{high} à la tension basse V_{low},

Dans ce cadre, avant le déclenchement de la transition par le changement du signal mode à un instant t₀ (c'est-à-dire en régime établi du fonctionnement à tension nominale), la source de tension variable V est commandée par le module de commande CMD (signal Cᵥ) de manière à générer une tension égale à V_{high}, et l'interrupteur K₁ est fermé (grâce à un signal de commande C₁ approprié) afin d'appliquer la tension V_{high} à la borne d'alimentation L : on a donc v_{core}=V_{high} (aux chutes de tension dans l'interrupteur K₁ près, qui ne sont pas prises en compte ici mais seront étudiées dans l'exemple de réalisation proposé plus bas).

Naturellement, pendant la période de fonctionnement en régime nominal précédant la transition (c'est-à-dire avant l'instant t₀), le module de commande CMD applique un signal C₂ tel que l'interrupteur K₂ est ouvert. Par ailleurs, le convertisseur numérique - analogique DAC et le comparateur sont inactifs (de telle sorte que ses circuits ne sont pas nécessairement alimentés en dehors des phases transitoires, comme expliqué à propos de l'exemple de réalisation décrit plus bas, ce qui permet de réduire notablement la consommation d'énergie du dispositif de la figure 1).

A l'instant t₀, le signal mode reçu par le module de commande CMD passe d'une valeur indiquant un fonctionnement en régime nominal à une valeur indiquant un fonctionnement à consommation réduite (voir "éco" sur la figure 2).

Lorsqu'il détecte ce changement d'état du signal mode, le module de commande CMD émet en direction du convertisseur numérique - analogique DAC un signal de commande Cᵣₐₘₚ qui entraîne la génération par le convertisseur numérique - analogique DAC d'une rampe de tension variant de la tension V_{high} à la tension V_{low} sur une durée τ prédéfinie.

Le changement du signal mode entraîne également l'activation du comparateur de sorte que ce dernier délivre un signal comp représentatif de la différence entre la tension V_{core} de la borne d'alimentation L et la tension Vᵣₐₘₚ généré par le convertisseur numérique - analogique DAC.

Du fait que la tension Vᵣₐₘₚ forme une rampe décroissante, le comparateur indique rapidement après l'instant t₀ une différence entre la tension V_{core} à la borne d'alimentation L et cette rampe de tension décroissante et transmet donc un signal comp rendant état de cette différence. Le module de commande CMD réagit alors en émettant un signal Cᵥ qui entraîne la diminution de la tension variable V en vue de réduire la différence mesurée par le comparateur.

La tension V_{core} de la borne d'alimentation L est ainsi asservie à la tension générée par le convertisseur numérique - analogique DAC et forme donc également une rampe descendante avec une temporisation identique à celle de la rampe générée par le convertisseur numérique - analogique DAC (éventuellement avec un léger retard selon la conception des éléments).

Le module de commande CMD est par ailleurs conçu de manière à commander (via le signal C₂) la fermeture de l'interrupteur K₂ lorsque la tension générée par le convertisseur numérique - analogique DAC a atteint la valeur V_{low} (c'est-à-dire au bout d'un temps τ après le changement de signal mode), et par conséquent lorsque la tension variable V a elle aussi été ramenée (au moyen de l'asservissement décrit ci-dessus) à la tension V_{low}. Cette condition peut être détectée par le module de commande CMD non seulement sur la base de la valeur Cᵣₐₘₚ envoyée au convertisseur DAC, mais également à la condition supplémentaire que le signal comp indique que la tension V_{core} est passée un instant sous la valeur Vᵣₐₘₚ. On s'assure ainsi que l'asservissement a eu le temps de fonctionner, ce qui est particulièrement intéressant dans les cas où la tension V_{core} est en retard sur la tension Vᵣₐₘₚ, par exemple du fait de l'utilisation d'une charge ayant une composante capacitive importante.

A partir de l'instant t₁ de fermeture de l'interrupteur K₂, les deux sources de tension (la première source de tension variable V et la seconde source de tension, ici fixe, V_{low}) sont ainsi appliquées à la borne d'alimentation L, sans toutefois générer de problème d'injection de courant entre les sources grâce à l'égalité des tensions générées par ces sources à cet instant.

On peut alors procéder, à un instant t₂ postérieur à l'instant t₁, à l'ouverture de l'interrupteur K₁, ce qui termine la phase de transition puisque la borne d'alimentation L n'est alors connectée qu'à la seconde source de tension V_{low} (tension réduite pour réduction d'énergie consommée).

On remarque que la transition de l'alimentation à tension haute (ici, tension nominale) à l'alimentation à tension basse a été réalisée avec une temporisation prédéfinie grâce à l'utilisation d'une rampe de tension prédéterminée (et, dans l'exemple décrit ci-dessus, grâce également à l'asservissement de la tension effective V_{core} sur la borne d'alimentation L à cette rampe de tension).

On va à présent étudier en référence à la figure 3 une phase de transition d'une alimentation à tension basse V_{low} à une alimentation à tension haute V_{high}.

Avant le début de la transition, c'est-à-dire avant le changement d'état de l'information mode reçue par le module de commande CMD, le dispositif fournit une alimentation à la tension basse V_{low} à la borne L : pour ce faire, avant le changement d'état du signal mode (à l'instant t₁₀ comme décrit dans la suite), le module de commande CMD délivre une information C₂ à l'interrupteur K₂ de sorte que ce dernier est fermé.

En régime établi d'alimentation à tension basse V_{low}, l'interrupteur commandé K₁ est ouvert (émission d'un signal C₁ correspondant par le module de commande CMD et la source de tension variable V est à un niveau indifférent (ou, dans certains modes de réalisation, pourrait même être coupée).

Comme déjà indiqué en référence à la figure 2, le comparateur et le convertisseur numérique-analogique DAC sont inactifs et peuvent ne pas être alimentés afin de réduire la consommation électrique du dispositif d'alimentation.

Lorsque le module de commande détecte le passage de l'information mode d'un niveau indiquant un fonctionnement en régime à économie d'énergie à un niveau indiquant un fonctionnement en régime nominal (instant t₁₀), il commande (au moyen de l'information Cᵥ) la source de tension variable V de telle sorte que celle-ci délivre une tension égale à la tension basse V_{low}.

Après une durée prédéterminée (liée en particulier au temps de réponse de la source de tension variable V afin de s'assurer que la source de tension V délivre bien une tension égale à V_{low}), le module de commande CMD entraîne la fermeture de l'interrupteur commandé K₁ par l'émission d'un signal de commande C₁ approprié (instant t₁₁).

A cet instant, la charge est donc alimentée (au niveau de la borne d'alimentation L) simultanément par les deux sources de tension, la première source de tension V par l'intermédiaire de l'interrupteur K₁ et la seconde source de tension V_{low} par l'intermédiaire de l'interrupteur K₂. Toutefois, du fait que la source de tension variable V ait été précédemment réglée à la tension basse v_{low}, cette alimentation simultanée par les deux sources de courant se fait sans problème, notamment sans injection de courant d'une source dans l'autre.

On procède alors (toujours au moyen de l'émission d'un signal de commande, ici le signal C₂, par le module de commande CMD) à l'ouverture de l'interrupteur K₂, si bien que seule la première source de tension V (fournissant toujours la tension V_{low}) est appliquée à la borne d'alimentation L (instant t₁₂).

On a ainsi procédé au passage de l'alimentation par une source à l'autre sans rupture d'alimentation.

Après une durée prédéterminée suivant la commande de l'ouverture de l'interrupteur K₂ (qui dépend du temps de réponse de cet interrupteur afin d'assurer son ouverture, et peut donc être relativement court), le module de commande CMD émet un signal Cᵣₐₘₚ (instant t₁₃) qui entraîne la génération par le convertisseur numérique - analogique DAC d'une rampe de tension montante, entre la tension V_{low} et la tension V_{high}, sur une durée prédéterminée τ.

On note que les durées impliquées (et la pente de la rampe) sont éventuellement programmables, par exemple au moyen d'instructions reçues d'un module de gestion de l'alimentation.

Selon un fonctionnement analogue à celui décrit en référence à la figure 2, du fait de l'asservissement de la tension V_{core} de la borne d'alimentation L à la tension Vᵣₐₘₚ généré par le convertisseur numérique - anologique DAC (au moyen du signal comp et de la génération d'une commande Cᵥ en fonction de ce signal comp pour réduire l'écart entre Vᵣₐₘₚ et V_{core}), le module de commande CMD provoque une variation de la première source de tension V qui suit celle de la rampe montante, jusqu'à la tension V_{high} à un instant t₁₄ postérieur d'un temps environ égal à τ de l'instant t₁₃.

Ainsi, à l'instant t₁₄, la source de tension V délivre sur la borne d'alimentation L une tension égale à la tension haute V_{high} de fonctionnement en régime nominal. Ce régime nominal étant atteint, le module de commande CMD peut rendre inactif le comparateur et le convertisseur numérique - analogique DAC. Le fonctionnement se poursuit alors en régime établi d'alimentation à la tension nominale V_{high}.

On remarque que dans ce cas aussi, du fait que les divers intervalles de temps impliqués dans la transition sont prédéterminés, la durée de la transition est prédéfinie.

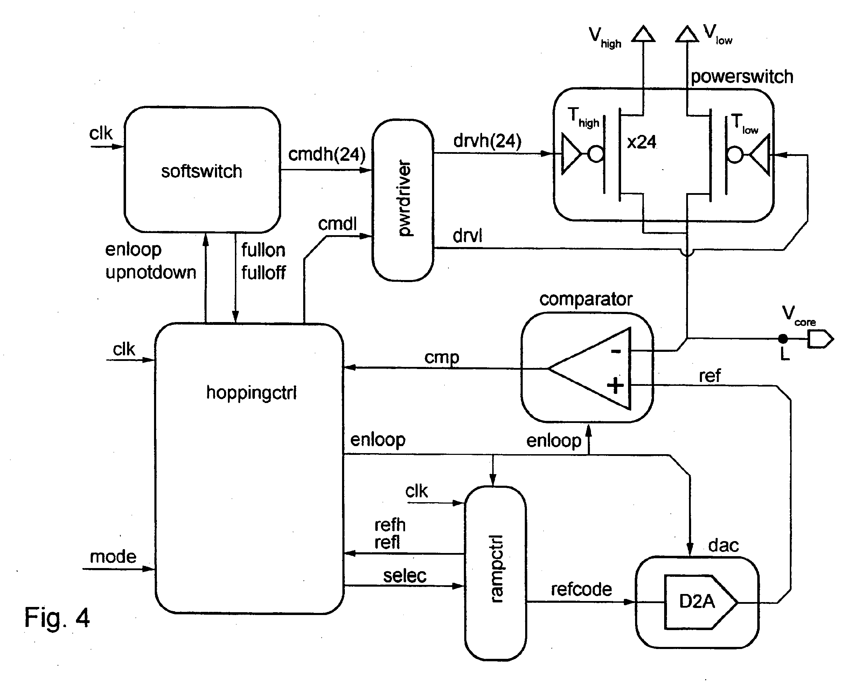

On décrit à présent en référence à la figure 4 un exemple plus détaillé de réalisation de l'invention qui reprend toutefois les principes généraux de fonctionnement décrits ci-dessus en référence aux figures 1 à 3. On commencera par décrire les différents éléments du circuit illustré à la figure 4, ici réalisé en technologie CMOS, avant d'expliquer le fonctionnement de ce dispositif, en particulier dans les phases de transition.

Le dispositif d'alimentation représenté à la figure 4 est un sélecteur d'alimentation dont l'objet général est d'appliquer sélectivement l'une des tensions V_{high} (tension haute) et V_{low} (tension basse) à une borne d'alimentation L dont la tension sera dans la suite désignée V_{core}.

La borne d'alimentation L est reliée aux sources de tension V_{high} et V_{low} par l'intermédiaire d'un élément de puissance désigné powerswitch sur la figure 4 et composé de transistors PMOS de puissance pilotés chacun par un inverseur.

Chaque inverseur (et donc chaque transistor PMOS) est commandé par un signal généré par un circuit de commande de puissance désigné pwrdriver sur la figure 4.

Plus précisément, la source de tension V_{low} est reliée à la borne d'alimentation L par un seul transistor PMOS désigné T_{low}, ici de longueur de grille égale au minimum technologique (65 nm dans le mode de réalisation présenté ici). Ce transistor T_{low} est commandé par un signal drvl généré par le circuit de commande de puissance.

La largeur du transistor PMOS précité est par ailleurs choisie pour réduire les pertes résistives (par exemple pour limiter la chute de tension à 3 % maximum de la tension V_{low} lorsque la consommation de la charge est maximale), sans trop accroître toutefois la largeur et donc la surface occupée par le transistor.

Le circuit de commande de puissance est par ailleurs dimensionné afin que l'allumage ou l'extinction du transistor PMOS précité soit relativement lent (plusieurs cycles d'horloge, soit environ 5 à 10 ns dans l'exemple décrit ici).

La source de tension V_{high} est quant à elle reliée à la borne d'alimentation L par une pluralité (24 dans l'exemple représenté à la figure 4) de transistors PMOS de puissance désignés T_{high} de longueur grille égale au minimum technologique (65 nm comme mentionné ci-dessus). Les drains, sources et substrats de l'ensemble de ces transistors T_{high} (reliant V_{high} à L) sont communs ; en revanche leurs grilles sont séparées et sont commandées chacune par un signal distinct drvh émis par le circuit de commande de puissance. Les transistors T_{high} reliant la source de tension V_{high} à la borne d'alimentation L sont dimensionnés en largeur de telle sorte que les pertes résistives (et par conséquent la chute de tension) soient réduites lorsque tous les transistors de l'ensemble sont passants, mais également qu'il existe une chute de tension significative lorsqu'un seul des transistors de l'ensemble est passant : ainsi, en jouant sur la commande de l'ouverture et de la fermeture des transistors au moyen des signaux drvh, on peut faire varier la tension appliquée à la borne d'alimentation L entre approximativement la tension V_{high} (tout transistor passant et donc chute de tension minimum) et une tension basse (un seul transistor passant et donc chute de tension maximum).

Comme on le comprendra dans la suite, le nombre de transistors PMOS reliant la source de tension V_{high} et la borne d'alimentation L doit être choisi suffisamment grand pour réduire le pas de tension à chaque allumage ou extinction d'un transistor (afin de se rapprocher autant que possible d'une source de tension variable de manière continue), sans toutefois que le temps nécessité par la commande successive de chacun des transistors de l'ensemble (au maximum une commande à chaque période d'horloge) ne soit trop long par rapport à la transition que l'on souhaite réaliser comme décrit ci-après.

Le circuit de commande de puissance pwrdriver est par ailleurs dimensionné de telle sorte que le temps d'allumage ou d'extinction des transistors T_{high} reliant la source de tension V_{high} à la borne d'alimentation L soit relativement rapide (moins d'un cycle d'horloge, soit environ 200 ps dans le cas décrit ici).

Le sélecteur d'alimentation de la figure 4 comprend une horloge (non représentée) qui génère un signal d'horloge clk à destination des différents éléments logiques du circuit comme représenté sur la figure 4. La fréquence de l'horloge est par exemple comprise entre 400 Mhz et 1,2 GHz.

Le sélecteur d'alimentation de la figure 4 comprend également un interrupteur logique (désigné selon l'appellation anglo-saxonne *"softswitch"* sur la figure 4), réalisé par exemple en logique séquentielle synchrone et qui forme en sortie (signaux cmdh) un *"code thermomètre",* ici sur 24 bits, c'est-à-dire un signal cmdh (ici un mot de 24 bits) dans lequel le nombre de bits à 1 augmente (ou diminue) successivement, par exemple à chaque période d'horloge.

L'interrupteur logique est commandé par une unité de commande (décrite ci-après), et plus précisément par un signal enloop qui commande l'évolution du code thermomètre (c'est-à-dire des sorties cmdh) et d'un signal upnotdown qui commande l'augmentation ou la réduction du nombre de bits à 1 dans le signal de sortie cmdh : si le signal d'activation enloop est à 0, le mot cmdh en sortie est inchangé ; en revanche, si le signal d'activation enloop vaut 1 :
- si le signal upnotdown est à 1, l'élément passe successivement ses sorties cmdh à 1, une à chaque coup d'horloge, en commençant par la sortie à 0 de poids le plus faible, jusqu'à ce qu'elles soient toutes à 1 ;
- si le signal upnotdown est à 0, l'élément passe successivement ses sorties cmdh à 0, une à chaque coup d'horloge, en commençant par la sortie à 1 de poids le plus fort, jusqu'à ce qu'elles soient toutes à 0.

L'interrupteur logique émet en retour à destination de l'unité de commande un signal fullon indiquant que tous les bits du mot cmdh sont à 1 et un signal fulloff indiquant que tous les bits du mot cmdh sont à 0.

Le mot cmdh généré par l'interrupteur logique softswitch est transmis au circuit de commande de puissance pwrdriver afin que chaque bit du mot cmdh contrôle un signal de commande d'un transistor T_{high} correspondant.

Ainsi, la combinaison de l'interrupteur logiciel et de l'élément de puissance associé à la source de tension V_{high} peut être vue comme un transistor *"complexe"* dont la largeur effective est modulée en fonction de la commande reçue de l'unité de commande via les signaux enloop et upnotdown qui permettent (via la commande du mot cmdh) d'augmenter ou de diminuer progressivement la largeur effective de ce transistor complexe, et ainsi comme déjà mentionné ci-dessus de faire varier la chute de tension au niveau de l'élément de puissance.

Le transistor complexe formé par la pluralité de transistors, associé à la source de tension fixe V_{high}, réalise ainsi à la fois les fonctions de l'interrupteur K₁ et de la source de tension variable V décrits en référence à la figure 1.

Le sélecteur d'alimentation de la figure 4 comprend également un générateur de rampes (désigné rampctrl sur la figure 4), réalisé en logique séquentielle synchrone et associé à un convertisseur numérique - analogique (désigné dac sur la figure 4) afin de générer des rampes linéaires de tension entre la tension haute V_{high} et une valeur proche de la tension basse V_{low} (précisément une valeur de tension V_{low}-Δᵣₐₘₚ).

On désigne dans la suite ref le noeud de sortie du convertisseur numérique - analogique et V_{ref} sa tension.

Le générateur de rampes rampctrl reçoit lui aussi le signal enloop émis par l'unité de commande et place la sortie du convertisseur numérique - analogique en haute impédance lorsque le signal enloop vaut 0 tandis qu'il génère une rampe comme précisé ci-après lorsque le signal enloop vaut 1.

A cet effet, le générateur de rampes reçoit également de l'unité de commande un signal selec qui vaut 0 lorsque l'unité de commande demande la génération d'une rampe montante (c'est-à-dire afin que la tension V_{ref} tende vers la tension V_{high}) et 1 lorsque l'unité de commande demande la génération d'une rampe descendante (c'est-à-dire lorsque V_{ref} doit tendre vers V_{low}-Δᵣₐₘₚ).

En retour, le générateur de rampes renvoie des informations refh et refl qui indiquent respectivement que la tension en sortie a atteint la borne supérieure ou inférieure de la rampe.

Le convertisseur numérique - analogique utilisé est adapté au pas de tension souhaité qui pourra être du même ordre que celui généré au niveau de l'élément de puissance.

Les paramètres de la rampe peuvent être prédéterminés : la durée est par exemple comprise entre 30 et 500 cycles d'horloge tandis que la valeur Δᵣₐₘₚ utilisée est par exemple comprise entre -20 mV et 60 mV.

En variante, ces paramètres pourraient naturellement être réglables au moyen de signaux de commande, émis par exemple par l'unité de commande ou par tout autre élément logique du circuit ou de la charge.

Le sélecteur d'alimentation de la figure 4 comprend également un comparateur (désigné *"comparator"* dans la figure 4) qui reçoit sur son entrée négative la tension V_{core} de la borne d'alimentation L et sur son entrée positive la tension V_{ref} de la sortie ref du convertisseur numérique - analogique. Le comparateur émet en sortie une information cmp représentative de la différence entre la tension V_{core} et la tension V_{ref}.

Le comparateur est choisi de manière à avoir un fonctionnement rapide (inférieur à une période d'horloge soit environ 200 ps dans le mode de réalisation décrit ici) et doit par ailleurs avoir une plage de fonctionnement qui couvre largement la plage des tensions qui lui sont appliquées (par exemple entre environ V_{high} et ¾ V_{low}).

L'unité de commande recopie le signal cmp généré par le comparateur en tant que signal upnotdown à destination de l'interrupteur logique. Précisément, le signal upnotdown vaut 1 lorsque la sortie du comparateur est positive, c'est-à-dire que la tension V_{ref} (qui joue le rôle d'une consigne) est supérieure à la tension V_{core}, et vaut 0 lorsque la sortie du comparateur est négative, c'est-à-dire lorsque la tension V_{core} est supérieure à la tension V_{ref}.

Ainsi, le comparateur, l'interrupteur logique et l'élément de puissance forment une boucle qui asservit la tension V_{core} à la tension V_{ref}.

En effet, quand la tension V_{core} est au dessus de la tension V_{ref}, l'interrupteur logique diminue la taille effective du transistor coté V_{high}, ce qui diminue la tension V_{core}. Inversement, quand la tension V_{core} est en dessous de la tension V_{ref}, l'interrupteur logique augmente la taille effective du transistor côté Vhigh, ce qui augmente la tension V_{core}.

En pratique, puisque le temps de réaction du système n'est pas nul, la tension V_{core} oscille autour de la tension V_{ref}. L'amplitude de ces oscillations est fonction de la fréquence d'horloge, du temps de réaction du comparateur, du temps de réaction de l'élément de puissance et du pas de tension choisi pour le découpage du transistor complexe formés par les transistors T_{high}.

En régime établi (phase stable), la charge est alimentée au niveau de la borne L par l'une ou l'autre des sources V_{high} et V_{low} (c'est-à-dire que soit l'ensemble des transistors T_{high} reliant la tension V_{high} sont passants et le transistor T_{high} reliant la tension V_{low} est bloqué, soit à l'inverse l'ensemble des transistors T_{high} reliant la tension V_{high} sont bloqués et le transistor T_{high} reliant la tension V_{low} est passant).

On peut prévoir que dans cette phase stable l'horloge (non représentée) soit éteinte et que le comparateur (alimenté par exemple par la source V_{high}) et le convertisseur numérique - analogique soient mis dans un état basse consommation.

L'unité de commande (ou contrôleur de saut), désignée hoppingctrl dans la figure 4 et déjà mentionnée à plusieurs reprises, est un élément réalisé en logique séquentielle synchrone qui gère les transitions comme expliqué en détail dans la suite. L'unité de commande reçoit une information désignée mode émise par un module de gestion de l'alimentation de la charge (non représenté) et indiquant le mode de fonctionnement souhaité (tension haute pour fonctionnement nominal ou tension basse pour consommation d'énergie réduite).

La détection par l'unité de commande d'une transition sur le signal mode qu'elle reçoit du module de gestion de l'alimentation de la charge provoque le réveil des différents éléments et le début d'une phase transitoire (que l'on pourrait dénommer *"séquence de saut"*). On décrit à présent les deux types de phase transitoire possibles.

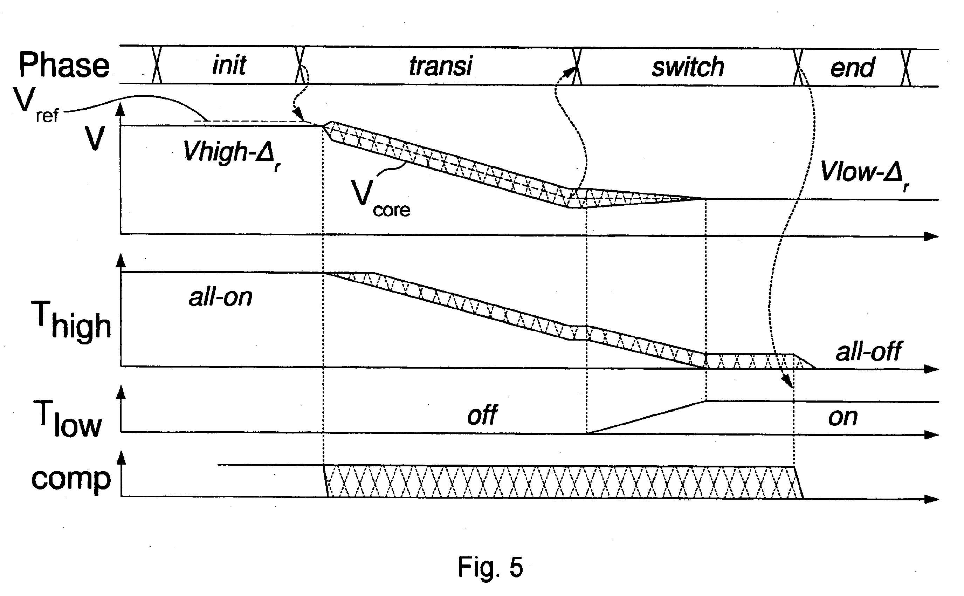

La **figure 5** représente les principaux signaux générés lors d'une phase transitoire descendante décrite à présent.

Au début de cette phase transitoire, la tension sur la borne d'alimentation L est égale à la tension de la source de tension haute V_{high} aux pertes résistives près (chute de tension Δᵣ). Tous les transistors T_{high} reliant cette source de tension à la borne d'alimentation L sont donc actifs (indication *"allon"* sur la figure 5).

A la détection d'une transition pour passer en mode de consommation d'énergie réduite par l'unité de commande, l'unité de commande fait passer à 1 le signal enloop pour réveiller les différents éléments du circuit. La tension en sortie du convertisseur numérique - analogique est mise à la valeur V_{high}, l'interrupteur logique émet un signal fullon tandis que la sortie du comparateur vaut 1 (puisque du fait des pertes résistives la tension V_{core} est légèrement inférieure à V_{ref}).

Après quelques cycles d'horloge (pour assurer une stabilisation des éléments analogiques), l'unité de commande fait passer à 1 la valeur du signal selec ce qui entraine la génération d'une rampe descendante et la diminution de la tension V_{ref}. Du fait de l'asservissement de la tension V_{core} à cette tension V_{ref} comme décrit ci-dessus, la tension V_{core} diminue également (précisément du fait de l'augmentation de la chute de tension aux bornes des transistors reliées à V_{high} du fait de la diminution de la largeur du canal commandée par l'interrupteur logique).

Lorsque le générateur de rampe atteint la borne inférieure de celle-ci, le signal refl passe à 1. Quand l'unité de commande détecte d'une part la valeur 1 du signal refl et d'autre part un passage à 1 de la sortie du comparateur cmp (qui indique que la tension V_{core} est effectivement passée un instant sous la tension V_{réf}), elle entraîne alors (via le signal cmdl à destination du circuit de commande de puissance pwrdriver) la fermeture du transistor T_{low} reliant la tension V_{low} à la borne d'alimentation L.

Comme vu précédemment, cette fermeture du transistor est relativement lente : le courant s'écoule de plus en plus dans le transistor P_{low} ce qui entraine une diminution correspondante du courant dans les transistors T_{high} et la poursuite de la fermeture de ces transistors pour maintenir la tension à laquelle le système est asservi (l'augmentation de la résistance au niveau des transistors T_{high} permise par les fermetures successives de transistors compensant la diminution de courant dans cette partie de l'élément de puissance afin de maintenir une chute de tension stable).

Lorsque le transistor T_{low} est complètement passant, l'unité de commande peut forcer à 0 le signal upnotdown jusqu'à ce que tous les transistors T_{high} liés à la tension V_{high} soient bloqués (ensemble du mot cmdh à 0), ce qui achève la phase de transition puisque la borne d'alimentation L se retrouve alimentée uniquement par la source de tension basse V_{low}.

L'unité de commande peut alors éteindre (le cas échéant passer en mode basse consommation) le comparateur, le convertisseur numérique - analogique et l'horloge.

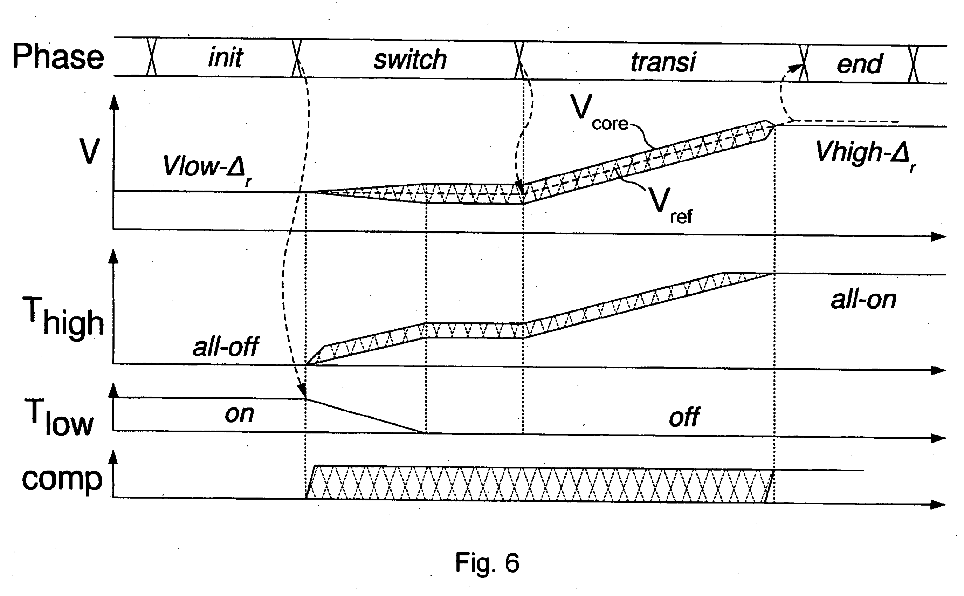

La **figure 6** représente les principaux signaux du circuit de la figure 4 lors d'une phase transitoire montante qui va à présent être décrite.

Comme déjà mentionné, à la détection d'un signal mode indiquant le passage d'un régime d'alimentation à basse tension à un régime d'alimentation à tension nominale, l'unité de commande provoque l'allumage de l'horloge, du comparateur et du convertisseur numérique - analogique (par exemple par le passage au niveau 1 du signal enloop).

Comme déjà mentionné, l'unité de commande recopie le signal de sortie cmp du comparateur sur l'entrée upnotdown de l'interrupteur logique. Les transistors T_{high} qui relient la source de tension V_{high} à la borne d'alimentation L commencent à s'allumer successivement (et donc à réduire la chute de tension à leur niveau) jusqu'à ce qu'un point d'équilibre soit atteint : à cet instant, la tension V_{core} oscille autour de la tension V_{ref} qui vaut environ V_{low} (précisément V_{low}-Δᵣ) avant génération de la rampe de tension montante.

Après un temps T prédéfini qui permet au système de s'équilibrer, l'unité de commande entraine via le signal cmdl, l'extinction du transistor T_{low} reliant la source de tension V_{low} à la borne d'alimentation L.

Du fait de l'asservissement et de la réduction du courant dans le transistor T_{low} du fait de son extinction, le courant augmente du côté T_{high} ce qui entraine (par la boucle d'asservissement) l'ouverture d'un plus grand nombre de transistors T_{high} afin de maintenir une tension stable, selon un phénomène inverse de celui décrit plus haut.

Une fois le transistor T_{low} totalement bloqué, un nouvel équilibre est ainsi atteint dans lequel la tension V_{core} oscille toujours autour de la tension V_{ref}.

Après un temps prédéterminé, l'unité de commande provoque au moyen du signal selec la génération d'une rampe ascendante : la tension V_{ref} augmente, suivie de la tension V_{core} grâce à l'asservissement, jusqu'à ce qu'elles atteignent la borne supérieure, à savoir V_{high}, à laquelle l'ensemble des transistors T_{high} est passant (auquel cas la tension V_{core} est très légèrement inférieure à V_{high} et vaut précisément V_{high}-Δᵣ). L'atteinte de la borne supérieure est par exemple détectée par l'unité de commande quand chacun des signaux refh et fullon sont à la valeur 1 (le premier indiquant l'atteinte de la borne supérieure par la consigne, le second indiquant l'atteinte effective de la borne supérieure au niveau de V_{core} pour tenir compte de tout retard éventuel de cette dernière tension).

On arrive ainsi dans un nouvel état stable du dispositif où la charge est alimentée uniquement à partir de la source V_{high} et on peut alors provoquer l'extinction de l'horloge et la mise en régime de basse consommation du comparateur et du convertisseur numérique - analogique.

L'invention n'est pas limitée aux modes de réalisation qui viennent d'être décrits. Par exemple, on pourrait prévoir deux sources de tension fixes, une source de tension variable, et des moyens de commutation pour passer sans discontinuité d'une source de tension fixe à la source de tension variable au début d'une phase de transition, à une modification continue de la tension variable jusqu'au niveau de l'autre source de tension et à une commutation de la source de tension variable à l'autre source de tension sans discontinuité pour achever la phase de transition.

Selon une autre variante, on pourrait envisager d'utiliser deux sources variables, l'une entre une tension basse et une tension intermédiaire et l'autre entre la tension intermédiaire et une tension haute, et des moyens de passage continus d'une source à l'autre lorsque les deux sources de tension génèrent la tension intermédiaire.

## Revendications

1. Dispositif d'alimentation d'un circuit électronique avec des moyens (K₁, K₂ ; T_{high}, T_{low}) pour appliquer sélectivement au moins une première tension (V_{high}) ou une seconde tension (V_{low}) à une borne d'alimentation (L) du circuit électronique,
**caractérisé par**
- des moyens (CMD, V; hoppingctrl, softswitch, pwrdriver, T_{high}) pour appliquer à la borne d'alimentation une tension variable d'une valeur égale à la première tension (V_{high}) à une valeur égale à la seconde tension (V_{low}) ;
- des moyens (CMD, K₂ ; hoppingctrl, pwrdriver, T_{low}) pour sélectionner l'application de la seconde tension (V_{low}) sur la borne d'alimentation (L) lorsque la tension variable atteint la seconde tension (V_{low}).

2. Dispositif d'alimentation selon la revendication 1, **caractérisé par** des moyens de mesure d'une tension mesurée sur la borne d'alimentation (L) et en ce que les moyens pour appliquer la tension variable sont aptes à déterminer la tension variable en fonction de la tension mesurée.

3. Dispositif d'alimentation selon la revendication 2, **caractérisé en ce que** les moyens pour appliquer la tension variable comprennent un générateur de rampe de tension (rampctrl, dac), un comparateur (comparator) de la tension mesurée et de la tension générée par le générateur et des moyens (hoppingctrl, softswitch, pwrdriver, T_{high}) pour former la tension variable en fonction d'une comparaison générée par le comparateur.

4. Dispositif d'alimentation selon l'une des revendications 1 à 3, **caractérisé par** :
- des moyens (CMD, K₁ ; hoppingctrl, softswitch, pwrdriver, T_{high}) pour appliquer la tension variable à la borne d'alimentation lorsque la seconde tension est appliquée à la borne d'alimentation ;
- des moyens (CMD, K₂ ; hoppingctrl, pwrdriver, T_{low}) pour supprimer l'application de la seconde tension lorsque la tension variable est appliquée ;
- des moyens (CMD, V ; hoppingctrl, softswitch, pwrdriver, T_{high}) pour commander la tension variable d'une valeur égale à la seconde tension à une valeur égale à la première tension.

5. Dispositif d'alimentation selon l'une des revendications 1 à 4, **caractérisé en ce que** des moyens pour générer la tension variable comprennent au moins un transistor (T_{high}) connecté à une tension fixe (V_{high}).

6. Dispositif d'alimentation selon l'une des revendications 1 à 5, **caractérisé en ce que** des moyens pour générer la tension variable comprennent une pluralité (T_{high}) de transistors ayant un drain commun et une source commune dont l'un est lié à une tension fixe et des grilles aptes à être commandées indépendamment.

7. Dispositif d'alimentation selon la revendication 5 ou 6, **caractérisé en ce que** la première tension (V_{high}) est reliée à la borne d'alimentation (L) par l'intermédiaire dudit au moins un transistor (T_{high}).

8. Dispositif d'alimentation selon l'une des revendications 5 à 7, **caractérisé en ce que** la tension fixe est égale à la première tension.

9. Dispositif d'alimentation selon l'une des revendications 5 à 8, **caractérisé en ce que** la seconde tension est reliée à la borne d'alimentation (L) par l'intermédiaire d'un transistor (T_{low}) distinct dudit au moins un transistor et commandé par lesdits moyens pour sélectionner l'application de la seconde tension sur la borne d'alimentation.

10. Dispositif d'alimentation selon l'une des revendications 1 à 9, **caractérisé en ce qu'**il est réalisé en technologie CMOS.

11. Dispositif d'alimentation selon l'une des revendications 1 à 10, **caractérisé en ce que** la première tension (V_{high}) est supérieure à la seconde tension (V_{low}).

12. Dispositif d'alimentation selon l'une des revendications 1 à 11, **caractérisé en ce que** la première tension correspond à une tension d'alimentation nominale du circuit électronique.

13. Dispositif d'alimentation selon l'une des revendications 1 à 12, **caractérisé en ce que** des moyens pour générer la seconde tension appliquée sont aptes à générer une tension variable.

14. Dispositif d'alimentation selon l'une des revendications 1 à 13, **caractérisé en ce que** les moyens pour appliquer sélectivement la première tension et la seconde tension sont aptes à appliquer au moins une troisième tension, non comprise entre la première tension et la seconde tension, à la borne d'alimentation.

15. Circuit électronique comprenant un dispositif d'alimentation selon l'une des revendications 1 à 14, **caractérisé en ce qu'**il comprend un circuit de gestion de l'alimentation apte à commander le dispositif d'alimentation.

## Patentansprüche

1. Vorrichtung zur Stromversorgung einer elektronischen Schaltung mit Mitteln (K₁, K₂; T_{high}, T_{low}) zum selektiven Anlegen zumindest einer ersten Spannung (V_{high}) oder einer zweiten Spannung (V_{low}) an eine Anschlussklemme (L) der elektronischen Schaltung, **gekennzeichnet durch**
- Mittel (CMD, V; hoppingctrl, softswitch, pwrdriver, T_{high}), um an die Anschlussklemme eine Spannung anzulegen, die von einem Wert gleich der ersten Spannung (V_{high}) bis zu einem Wert gleich der zweiten Spannung (V_{low}) variabel ist;
- Mittel (CMD, K₂; hoppingctrl, softswitch, pwrdriver, T_{low}), um das Anlegen der zweiten Spannung (V_{low}) an die Anschlussklemme (L) dann zu wählen, wenn die variable Spannung die zweite Spannung (V_{low}) erreicht.

2. Versorgungsvorrichtung nach Anspruch 1,
**gekennzeichnet durch** Mittel zum Messen einer Spannung, die an der Anschlussklemme (L) gemessen wird, und
**dadurch**, dass die Mittel zum Anlegen der variablen Spannung dazu geeignet sind, die variable Spannung in Abhängigkeit von der gemessenen Spannung zu bestimmen.

3. Versorgungsvorrichtung nach Anspruch 2,
**dadurch gekennzeichnet, dass** die Mittel zum Anlegen der variablen Spannung einen Spannungsrampengenerator (rampctrl, dac), einen Komparator (comparator) für die gemessene Spannung und die von dem Generator erzeugte Spannung und Mittel (hoppingctrl, softswitch, pwrdriver, T_{high}) aufweisen, um die variable Spannung in Abhängigkeit von einem mit dem Komparator durchgeführten Vergleich zu erzeugen.

4. Versorgungsvorrichtung nach einem der Ansprüche 1 bis 3, **gekennzeichnet durch**
- Mittel (CMD, K₁; hoppingctrl, softswitch, pwrdriver, T_{high}), um an die Anschlussklemme die variable Spannung dann anzulegen, wenn die zweite Spannung an die Anschlussklemme angelegt ist;
- Mittel (CMD, K₂; hoppingctrl, pwrdriver, T_{low}), um das Anlegen der zweiten Spannung dann auszusetzen, wenn die variable Spannung angelegt ist;
- Mittel (CMD, V; hoppingctrl, softswitch, pwrdriver, T_{high}), um die variable Spannung von einem Wert gleich der zweiten Spannung auf einen Wert gleich der ersten Spannung zu steuern.

5. Versorgungsvorrichtung nach einem der Ansprüche 1 bis 4,
**dadurch gekennzeichnet, dass** Mittel zum Erzeugen der variablen Spannung zumindest einen Transistor (T_{high}) aufweisen, der an eine feste Spannung (V_{high}) angeschlossen ist.

6. Versorgungsvorrichtung nach einem der Ansprüche 1 bis 5,
**dadurch gekennzeichnet, dass** Mittel zum Erzeugen der variablen Spannung eine Mehrzahl (T_{high}) von Transistoren aufweisen, die einen gemeinsamen Drain und eine gemeinsame Source, wovon eines mit einer festen Spannung verbunden ist, und Gates besitzen, die dazu geeignet sind, unabhängig gesteuert zu werden.

7. Versorgungsvorrichtung nach dem Anspruch 5 oder 6,
**dadurch gekennzeichnet, dass** die erste Spannung (V_{high}) über den zumindest einen Transistor (T_{high}) mit der Anschlussklemme (L) verbunden ist.

8. Versorgungsvorrichtung nach einem der Ansprüche 5 bis 7,
**dadurch gekennzeichnet, dass** die feste Spannung gleich der ersten Spannung ist.

9. Versorgungsvorrichtung nach einem der Ansprüche 5 bis 8,
**dadurch gekennzeichnet, dass** die zweite Spannung über einen Transistor (T_{low}) mit der Anschlussklemme (L) verbunden ist, der sich von dem zumindest einen Transistor unterscheidet und über die Mittel zum Auswählen des Anlegens der zweiten Spannung an die Anschlussklemme gesteuert wird.

10. Versorgungsvorrichtung nach einem der Ansprüche 1 bis 9,
**dadurch gekennzeichnet, dass** sie in CMOS-Technologie ausgeführt ist.

11. Versorgungsvorrichtung nach einem der Ansprüche 1 bis 10,
**dadurch gekennzeichnet, dass** die erste Spannung (V_{high}) höher als die zweite Spannung (V_{low}) ist.

12. Versorgungsvorrichtung nach einem der Ansprüche 1 bis 11,
**dadurch gekennzeichnet, dass** die erste Spannung einer Nennversorgungsspannung der elektronischen Schaltung entspricht.

13. Versorgungsvorrichtung nach einem der Ansprüche 1 bis 12,
**dadurch gekennzeichnet, dass** Mittel zum Erzeugen der angelegten zweiten Spannung dazu geeignet sind, eine variable Spannung zu erzeugen.

14. Versorgungsvorrichtung nach einem der Ansprüche 1 bis 13,
**dadurch gekennzeichnet, dass** die Mittel zum selektiven Anlegen der ersten Spannung und der zweiten Spannung dazu geeignet sind, an die Anschlussklemme zumindest eine dritte Spannung anzulegen, die nicht zwischen der ersten Spannung und der zweiten Spannung liegt.

15. Elektronische Schaltung mit einer Versorgungsvorrichtung nach einem der Ansprüche 1 bis 14,
**dadurch gekennzeichnet, dass** sie einen Steuerkreis zum Steuern der Versorgung aufweist, der dazu geeignet ist, die Versorgungsvorrichtung zu steuern.

## Claims

1. Electronic circuit power supply device including means (K₁, K₂; Thigh, T_{low}) for selectively applying at least a first voltage (V_{high}) or a second voltage (V_{low}) to a power supply terminal (L) of the electronic circuit,
**characterized by**
- means (CMD, V; hoppingctrl, softswitch, pwrdriver, T_{high}) for applying to the power supply terminal a voltage variable from a value equal to the first voltage (V_{high}) to a value equal to the second voltage (V_{low}) ;
- means (CMD, K₂; hoppingctrl, pwrdriver, T_{low}) for selecting application of the second voltage (V_{low}) to the power supply terminal (L) when the variable voltage reaches the second voltage (V_{low}).

2. Power supply device according to claim 1, **characterized by** means for measuring a measured voltage at the power supply terminal (L) and in that the means for applying the variable voltage are adapted to determine the variable voltage as a function of the measured voltage.

3. Power supply device according to claim 2, **characterized in that** the means for applying the variable voltage comprise a voltage ramp generator (rampctrl, dac), a comparator of the measured voltage and the voltage generated by the generator, and means (hoppingctrl, softswitch, pwrdriver, T_{high}) for forming the variable voltage as a function of a comparison generated by the comparator.

4. Power supply device according to any one of claims 1 to 3, **characterized by**:
- means (CMD, K₁; hoppingctrl, softswitch, pwrdriver, T_{high}) for applying the variable voltage to the power supply terminal when the second voltage is applied to the power supply terminal;
- means (CMD, K₂; hoppingctrl, pwrdriver, T_{low}) for canceling application of the second voltage when the variable voltage is applied;
- means (CMD, V; hoppingctrl, softswitch, pwrdriver, T_{high}) for changing the variable voltage from a value equal to the second voltage to a value equal to the first voltage.

5. Power supply device according to any one of claims 1 to 4, **characterized in that** means for generating the variable voltage comprise at least one transistor (T_{high}) connected to a fixed voltage (V_{high}).

6. Power supply device according to any one of claims 1 to 5, **characterized in that** the means for generating the variable voltage comprise a plurality of transistors (T_{high}) having a common drain and a common source, one of which is connected to a fixed voltage, and gates adapted to be controlled independently.

7. Power supply device according to claim 5 or 6, **characterized in that** the first voltage (V_{high}) is connected to the power supply terminal (L) via said at least one transistor (T_{high}).

8. Power supply device according to any one of claims 5 to 7, **characterized in that** the fixed voltage is equal to the first voltage.

9. Power supply device according to any one of claims 5 to 8, **characterized in that** the second voltage is connected to the power supply terminal (L) via a transistor (T_{low}) separate from said at least one transistor and controlled by said means for selecting application of the second voltage to the power supply terminal.

10. Power supply device according to any one of claims 1 to 9, **characterized in that** it is implemented in
CMOS technology.

11. Power supply device according to any one of claims 1 to 10, **characterized in that** the first voltage (V_{high}) is greater than the second voltage (V_{low}).

12. Power supply device according to any one of claims 1 to 11, **characterized in that** the first voltage corresponds to a nominal power supply voltage of the electronic circuit.

13. Power supply device according to any one of claims 1 to 12, **characterized in that** means for generating the applied second voltage are adapted to generate a variable voltage.

14. Power supply device according to any one of claims 1 to 13, **characterized in that** the means for selectively applying the first voltage and the second voltage are adapted to apply to the power supply terminal at least one third voltage not between the first voltage and the second voltage.

15. Electronic circuit comprising a power supply device according to any one of claims 1 to 14, **characterized in that** it comprises a power supply management circuit adapted to control the power supply device.
